# EUROPEAN PATENT SPECIFICATION

(11) **EP 2 947 665 B1**
(45) Date of publication and mention of the grant of the patent: **01.05.2019**
(21) Application number: 15160697.7
(22) Date of filing: 25.03.2015
(51) Int. Cl.: H01F 7/127, H01F 7/128, H01F 27/22

(54) **ELECTROMAGNETIC VALVE**
ELEKTROMAGNETISCHES VENTIL
SOUPAPE ÉLECTROMAGNÉTIQUE

(30) Priority: 22.05.2014 JP 2014105950
(43) Date of publication of application: 25.11.2015
(73) Proprietor: MITSUBISHI HEAVY INDUSTRIES, LTD., Tokyo 108-8215 (JP)
(72) Inventor: Takeda, Katsuhiko, Tokyo 108-8215 (JP); Matsuo, Takeshi, Tokyo 108-8215 (JP); Shimizu, Masayuki, Tokyo 108-8215 (JP); Masuda, Toyotsugu, Tokyo 108-0014 (JP)
(74) Representative: Intès, Didier Gérard André

(56) References cited:
- DE-A1-102010 035 954
- GB-A- 958 124
- JP-A- 2011 038 630
- JP-A- 2014 027 206

## Description

### TECHNICAL FIELD

The present invention relates to an electromagnetic valve, a fluid machine, a hydraulic machine and a renewable energy power generating apparatus. It also relates to a method of manufacturing an electromagnetic valve.

### BACKGROUND

An electromagnetic valve includes a solenoid coil for generating magnetic attractive force by applying electric power. When electric current is applied to the solenoid coil, heat is generated by electrical resistance. The longer period of time electric power is applied, the higher the temperature of the solenoid coil rises. It is known that, when the temperature of the solenoid coil rises, the electric resistance of the solenoid coil increases and the value of the electric current flowing through the solenoid coil decreases, which in consequence decreases the magnetic attractive force.

In this context, proposed are configurations of electromagnetic valves and solenoid coils for restricting a decrease in the electromagnetic attractive force due to such temperature rise.

For instance, Patent Document 1 discloses an actuator coil including a coil wound around so as to form a plurality of layers in the circumferential direction and the axial direction, and a heat transfer element for transferring heat generated in the internal layer of the coil to outside of the coil. Further, as an example of the heat transfer element, disclosed is a band-shaped element or a sheet-shaped element formed from a heat transfer material and disposed between the layers of the coil. Such heat transfer element transfers the heat generated at the internal layer of the coil to the outside region of the coil.

Further, Patent Document 2 describes an electromagnetic valve including a mold coil having a coil bobbin, a winding part formed by winding a wire around the coil bobbin, and a resin mold layer at which the winding part is molded by resin. A fin is formed on the resin mold layer so that the heat generated by applying electric power to the coil is transferred to the resin mold layer to be released from the fin.

Document JP 2011 038630 A discloses an electromagnetic valve according to the preamble of claim 1.

### Citation List

### Patent Literature

Patent Document 1: US Patent Application Pub. No. 2010/0026974
Patent Document 2: Japanese Patent Application Pub. No. 2013-24304

### SUMMARY

Meanwhile, in the manufacture process of an electromagnetic valve, assembly of a coil bobbin holding a solenoid coil and a valve casing may involve forming a gap between the inner circumferential side of the coil bobbin and the valve casing for e.g. manufacture reasons. When there is a gap between the coil bobbin and the valve casing, the heat transfer path, through which the heat transfers from the solenoid coil toward the inner circumferential side to the valve casing, is interrupted, which decreases the speed of heat transfer of the same path. Thus, it may not be possible to effectively restrict the temperature rise of the solenoid coil.

In this regard, Patent Documents 1 and 2 mention no countermeasures for restricting the temperature rise of the solenoid coil taking account of the possible gap between the inner circumferential side of the coil bobbin and the valve casing for e.g. manufacture reasons.

The present invention was made in view of the above issues. An object of at least one embodiment of the present invention is to provide an electromagnetic valve capable of improving the heat release property of releasing heat that is generated in the solenoid coil.
(1) An electromagnetic valve, as defined in claim 1, according to at least one embodiment of the present invention includes: a solenoid coil; a valve body configured to be driven by electromagnetic force of the solenoid coil; a coil bobbin which includes a cylindrical portion and a pair of flanges disposed so as to extend radially outward from opposite ends of the cylindrical portion, and which holds the solenoid coil in a space formed between the pair of flanges at an outer circumferential side of the cylindrical portion: a valve casing which includes a shaft portion inserted through the cylindrical portion of the coil bobbin, and which accommodates the coil bobbin disposed around the shaft portion; the solenoid coil and the valve body; and a filler which is disposed in a gap between an inner circumferential surface of the cylindrical portion of the coil bobbin and an outer circumferential surface of the shaft portion of the valve casing, and which has a higher thermal conductivity than air.

In a typical electromagnetic valve, a gap (i.e., air) normally exists between the inner circumferential surface of the coil bobbin holding the solenoid coil and the outer circumferential surface of the shaft portion of the valve casing accommodating the solenoid coil and the valve body, for e.g. manufacture reasons. In the electromagnetic valve of this type, the above gap (air) exists on a heat transfer path through which heat transfers from the solenoid coil toward the inner circumferential side to the valve casing.

In this regard, according to the above electromagnetic valve of the present embodiment, the filler having a higher thermal conductivity than air is disposed in the gap, if any, between the inner circumferential surface of the cylindrical portion of the coil bobbin and the outer circumferential surface of the shaft portion of the valve casing. Thus, the heat generated in the solenoid coil is effectively transferred to the valve casing (shaft portion) on the heat transfer path that leads to the valve casing from the solenoid coil toward the inner circumferential side. As a result, compared to a typical electromagnetic valve having a gap (air) on a heat transfer path, it is possible to improve the heat release property of releasing heat from the solenoid coil to the valve casing by providing the filler, which enables even more effective heat transfer.

(2) In some embodiments, for instance in the configuration described in the above (1), the valve casing includes a filling aperture for filling the gap between the inner circumferential surface of the cylindrical portion of the coil bobbin and the outer circumferential surface of the shaft portion of the valve casing with the filler.

In this case, it is possible to fill the gap with the filler through the filling aperture from outside of the valve casing after assembling the valve casing and the coil bobbin. Thus, it is easy to manufacture the electromagnetic valve including the filler disposed between the inner circumferential surface of the cylindrical portion of the coil bobbin and the outer circumferential surface of the shaft portion of the valve casing.

(3) In some embodiments, for instance in the configuration described in the above (1) or (2), the thermal conductivity of the filler is not less than 0.5W/K • m.

In this case, the thermal conductivity of the filler is considerably higher than the thermal conductivity of the air (approximately 0.024W /K • m at room temperature), which enhances the heat release property.

In the present specification, the term "thermal conductivity" refers to the thermal conductivity at room temperature.

(4) The valve casing includes a first member forming the shaft portion and a second member forming a part which faces an outer surface of at least one of the pair of flanges. The first member has a thermal conductivity higher than that of the second member.

In this way, it is possible to dissipate the heat, which has transferred to the shaft portion of the first member from the solenoid coil via the filler, to the outside effectively. Thus, in cooperation with the configuration of the above (1), the heat transfer via the path leading to the valve casing from the solenoid coil toward the inner circumferential side is even more promoted.

(5) In some embodiments, for instance in the configuration described in the above (4), the first member includes a magnetic body for forming a magnetic path which leads to the valve body from the solenoid coil, the magnetic body forming the shaft portion. Further, the second member includes a non-magnetic body of a ring shape which is inserted onto the shaft portion to which the coil bobbin is attached, and the shaft portion surrounded by the non-magnetic body is configured to apply the magnetic force to the valve body.

In this case, the first member disposed inside of the inner circumferential surface of the cylindrical portion of the coil bobbin includes the magnetic body, while the second member disposed outside the cylindrical portion of the coil bobbin in the axial direction includes the non-magnetic body, which makes it possible to reduce magnetic flux lines extending toward the second member, and to form the magnetic flux lines concentrated on the first member. As a result, it is possible to enhance the electromagnetic force (electromagnetic attractive force) of the solenoid coil for driving the valve body.

(6) In some embodiments, for instance in the configuration described in any one of the above (1) to (5), the coil bobbin has a thermal conductivity of not less than 50W /K • m.

In this case, the coil bobbin holding the solenoid coil has a high thermal conductivity, which promotes heat release from the solenoid coil to the valve casing via the coil bobbin.

(7) In some embodiments, for instance in the configuration described in any one of the above (1) to (6), the coil bobbin is made from metal, and the coil bobbin includes a slit which extends in an axial direction of the cylindrical portion, the slit being filled with an insulating material.

In this case, the coil bobbin holding the solenoid coil is made from metal having a high thermal conductivity, which promotes heat release from the solenoid coil to the valve casing via the coil bobbin. Further, the slit is disposed on the coil bobbin so as to extend in the axial direction of the cylindrical portion, which restricts eddy current generated in the coil bobbin. Further, since the slit is filled with the insulating material, it is possible to wind the coil without reducing the eddy-current restricting effect, which facilitates manufacture of the solenoid coil.

(8) In some embodiments, for instance in the configuration described in the above (7), the coil bobbin is made from a material containing aluminum or aluminum alloy.

In this case, aluminum, which has a high thermal conductivity, is included in the material of the coil bobbin, which promotes heat release from the solenoid coil to the valve casing via the coil bobbin.

(9) In some embodiments, for instance in the configuration described in any one of the above (1) to (8), the valve casing includes a flow channel of a fluid which is to be controlled by the electromagnetic valve, and the valve casing includes a seal for sealing a path through which the fluid flows from the flow channel to the solenoid coil.

When a flow channel of fluid is formed in the valve casing, another path of fluid might be secured so as to extend from the flow channel to the solenoid coil to utilize the fluid as a coolant medium. In this case, even though the solenoid could be cooled effectively, it may be necessary to address leakage of fluid from the electromagnetic valve to the outside.

In this regard, with the configuration described in the above (9), it is unnecessary to actively guide the fluid to the solenoid coil for the purpose of cooling the solenoid coil, because the filler is disposed between the inner circumferential surface of the cylindrical portion of the coil bobbin and the outer circumferential surface of the shaft portion of the valve casing (the configuration described in the above (1)). Thus, it is possible to dispose the seal, in the valve casing, for blocking the path through which the fluid flows from the flow channel to the solenoid coil, which makes it possible to prevent leakage of the fluid to the outside of the valve casing.

(10) A fluid machine according to at least one embodiment of the present invention includes the electromagnetic valve having the configuration described in the above (1) to (9), for instance, and a structure into which the electromagnetic valve is configured to be incorporated. The structure includes a flow channel of the fluid which is to be controlled by the electromagnetic valve, and has a thermal conductivity of not less than 5W /K • m.

With the above fluid machine, the structure into which the electromagnetic valve is to be incorporated has a relatively high thermal conductivity of not less than 5W /K • m. Thus, the heat having been generated in the solenoid coil of the electromagnetic valve is smoothly transferred to the structure disposed outside the electromagnetic valve via the valve casing. As a result, it is possible to dissipate the heat generated in the solenoid coil even more effectively.

(10) A hydraulic machine according to at least one embodiment of the present invention includes the electromagnetic valve described in the above (1) to (9), for instance. The hydraulic machine includes: a cylinder block on which the valve casing is mountable; a cylinder formed inside the cylinder block; and a piston which is configured to be reciprocable in an axial direction of the cylinder by being guided by the cylinder. The cylinder block includes a flow channel which is communicable to a working chamber defined by the cylinder and the piston. Also, the electromagnetic valve is mounted to the cylinder block so that the valve body is disposed between the flow channel of the fluid and the working chamber, and configured to be capable of switching connection between the working chamber and the flow channel of the fluid by supplying electric power to the solenoid coil. The cylinder block has a thermal conductivity of not less than 5W /K • m.

With the above hydraulic machine, the cylinder block into which the electromagnetic valve is to be incorporated has a relatively high thermal conductivity of not less than 5W /K • m. Thus, the heat having been generated in the solenoid coil of the electromagnetic valve is smoothly transferred to the cylinder block disposed outside the electromagnetic valve via the valve casing. As a result, it is possible to enhance the heat release property of releasing heat generated in the solenoid coil even further.

(12) A renewable energy power generating apparatus according to at least one embodiment of the present invention generates electric power from a renewable energy source. The renewable energy power generating apparatus includes: at least one blade; a hub to which the at least one blade is mounted; a hydraulic pump configured to be driven by rotation of the hub; at least one hydraulic motor configured to be driven by pressurized oil generated in the hydraulic pump, and a generator which is configured to be driven by the at least one hydraulic motor. The hydraulic pump or the hydraulic motor includes the hydraulic machine described in the above (10) or (11), for instance.

With the above renewable energy power generating apparatus, in the hydraulic pump or the hydraulic motor, the cylinder block into which the electromagnetic valve is to be incorporated has a relatively high thermal conductivity of not less than 5W/K • m. Thus, the heat having been generated in the solenoid coil of the electromagnetic valve is smoothly transferred to the cylinder block disposed outside the electromagnetic valve via the valve casing. As a result, it is possible to enhance the heat release property of releasing heat generated in the solenoid coil even further.
(13) In some embodiments, in the configuration described in the above (12) for instance, the renewable energy power generating apparatus is a wind turbine power generating apparatus which generates electric power from wind which serves as the renewable energy source.
(14) A method of manufacturing an electromagnetic valve according to at least one embodiment of the present invention is for an electromagnetic valve as defined in claim 13 including: a solenoid coil; a valve body configured to be driven by electromagnetic force of the solenoid coil; a coil bobbin which includes a cylindrical portion and a pair of flanges disposed so as to extend radially outward from opposite ends of the cylindrical portion, and which holds the solenoid coil in a space formed between the pair of flanges at an outer circumferential side of the cylindrical portion; and a valve casing which includes a shaft portion inserted through the cylindrical portion of the coil bobbin, and which accommodates the coil bobbin disposed around the shaft portion, the solenoid coil and the valve body. The method includes: an inserting step of inserting the shaft portion of the valve casing into the cylindrical portion of the coil bobbin holding the solenoid coil; and a filling step of filling a gap between an inner circumferential surface of the cylindrical portion of the coil bobbin and an outer circumferential surface of the shaft portion of the valve casing with a filler having a higher thermal conductivity than air.

According to the above method of manufacturing an electromagnetic valve, the filler having a higher thermal conductivity than air is disposed in the gap, if any, between the inner circumferential surface of the cylindrical portion of the coil bobbin and the outer circumferential surface of the shaft portion of the valve casing after inserting the shaft portion of the valve casing into the cylindrical portion of the coil bobbin holding the solenoid coil. As a result, an electromagnetic valve is obtained, where the heat generated in the solenoid coil is effectively transferred to the valve casing (shaft portion) on the heat transfer path that leads to the valve casing from the solenoid coil toward the inner circumferential side, thanks to the filler disposed between the inner circumferential surface of the cylindrical portion of the coil bobbin and the outer circumferential surface of the shaft portion of the valve casing. Thus, compared to a typical electromagnetic valve having a gap (air) on a heat transfer path, it is possible to improve the heat release property of releasing heat from the solenoid coil to the valve casing by providing the filler, which enables even more effective heat transfer.

(15) In some embodiments, in the method described in the above (14) for instance, in the filling step, the gap is filled with the filler while reducing a pressure in the gap between the inner circumferential surface of the cylindrical portion of the coil bobbin and the outer circumferential surface of the shaft portion of the valve casing.

In this case, since the gap is filled with the filler while reducing the pressure in the gap between the inner circumferential surface of the cylindrical portion of the coil bobbin and the outer circumferential surface of the shaft portion of the valve casing, it is easy to make the filler adhere to the inner circumferential surface of the cylindrical portion of the coil bobbin and the outer circumferential surface of the shaft portion of the valve casing. Thus, it is possible to further enhance the heat release property for releasing the heat generated in the solenoid coil.

(16) In some embodiments, in the configuration described in the above (1) to (13) for instance, the electromagnetic valve includes a filler which has a higher thermal conductivity than air, disposed between the inner circumferential surface of the cylindrical portion of the coil bobbin and the outer circumferential surface of the shaft portion of the valve casing.

(17) In some embodiments, in the method described in the above (14) or (15) for instance, in the filling step, the gap between the inner circumferential surface of the cylindrical portion of the coil bobbin and the outer circumferential surface of the shaft portion of the valve casing is filled with the filler having a higher thermal conductivity than air.

According to at least one embodiment of the present invention, it is possible to improve the heat release property of releasing the heat generated in the solenoid coil.

### BRIEF DESCRIPTION OF DRAWINGS

FIG. 1 is a schematic cross-sectional view of a configuration of an electromagnetic valve according to one embodiment of the present invention.
FIG. 2 is a planar view of a configuration of a coil bobbin according to one embodiment of the present invention.
FIG. 3 is a perspective view of a configuration of the coil bobbin according to one embodiment of the present invention.
FIG. 4 is a schematic diagram of a wind turbine power generating apparatus (renewable energy power generating apparatus) according to one embodiment of the present invention.
FIG. 5 is a schematic lateral cross-sectional view of a hydraulic machine (fluid machine) according to one embodiment of the present invention.
FIG. 6 is a schematic cross-sectional view of a part of the hydraulic machine (fluid machine) according to one embodiment of the present invention, illustrated with the electromagnetic valve.

### DETAILED DESCRIPTION

Embodiments of the present invention will now be described with reference to the accompanying drawings. It is intended, however, dimensions, materials, shapes, relative positions and the like of components described in the embodiments or the drawings shall be interpreted as illustrative only and not limitative of the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of a shape such as "a rectangular shape" or "a cylindrical shape" shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

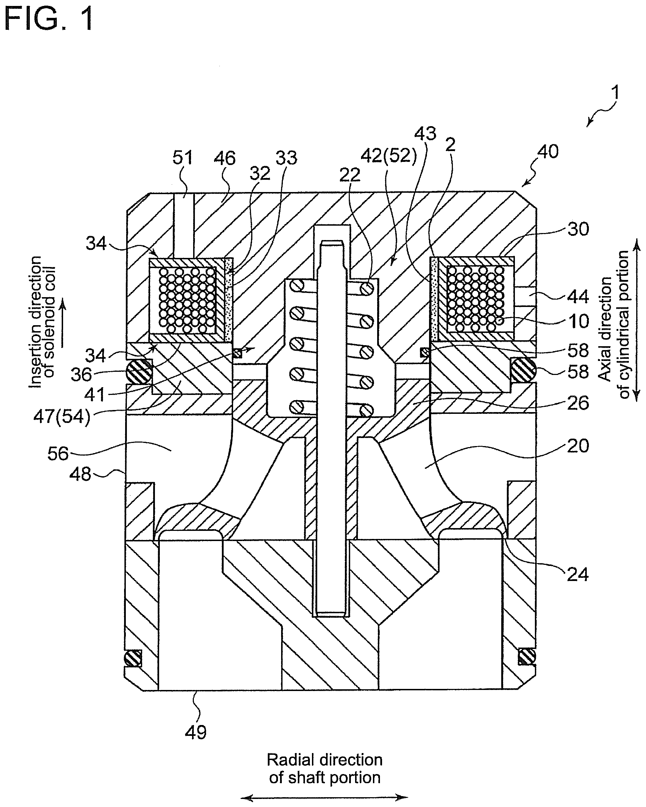

First, referring to FIGs. 1 to 3, the configuration of the electromagnetic valve according to one embodiment of the present invention will be described.

FIG. 1 is a schematic cross-sectional view of a configuration of an electromagnetic valve according to one embodiment of the present invention. As illustrated in the drawing, the electromagnetic valve 1 includes a solenoid coil 10, a valve body 20 configured to be driven by electromagnetic force of the solenoid coil 10, a coil bobbin 30 holding the solenoid coil 10, and a valve casing 40 which houses the coil bobbin 30, the solenoid coil 10 and the valve body 20.

The coil bobbin 30 includes a cylindrical portion 32, and a pair of flanges 34 disposed so as to extend radially outward from opposite ends of the cylindrical portion 32. The coil bobbin 30 is configured to hold the solenoid coil 10 in a space formed between the pair of flanges 34 at the outer circumferential side of the cylindrical portion 32.

The valve casing 40 includes a shaft portion 42 inserted into the cylindrical portion 32 of the coil bobbin 30. The coil bobbin 30 is disposed around the shaft portion 42. The valve casing 40 is configured to house the above coil bobbin 30, the solenoid coil 10 held by the coil bobbin 30, and the valve body 20.

The electromagnetic valve 1 illustrated in FIG. 1 is a normal-close type, and FIG. 1 illustrates a state where electric power is not applied to the solenoid coil 10 and the electromagnetic valve is closed.

When electric power is not applied to the solenoid coil 10, the valve body 20 is biased toward a valve seat 24 by a spring 22, and thus the electromagnetic valve 1 is brought into a closed-valve state, where the first port 48 and the second port 49 in FIG. 1 are not in communication with each other.

On the other hand, when electric power is applied to the solenoid coil 10, the electromagnetic valve 1 is magnetized, where the electromagnetic force of the solenoid coil 10 attracts an armature of the valve body 20, and the valve body 20 moves away from the valve seat 24 resisting the biasing force of the spring 22 due to the electromagnetic force, so that the electromagnetic valve 1 is brought into an open-valve state, where the first port 48 and the second port 49 in FIG. 1 are in communication with each other.

That is, with the above electromagnetic valve 1, it is possible to switch the communication state between the first port 48 and the second port 49 by controlling the supply of electric current to the solenoid coil. Thus, the electromagnetic valve 1 can be used to control fluid such as gas (e.g. air) and liquid (e.g. oil), for instance.

In some embodiments, the electromagnetic valve 1 may be of a normal-open type, which opens when electric power is not applied to the solenoid coil 10 and closes when electric power is applied to the solenoid coil 10.

The electromagnetic valve 1 illustrated in FIG. 1 further includes a filler 2 disposed between the cylindrical portion 32 of the coil bobbin 30 and the outer circumferential surface 43 of the shaft portion 42 of the valve casing 40. The filler 2 has a higher thermal conductivity than air.

According to the above electromagnetic valve 1 of the present embodiment, the filler 2 having a higher thermal conductivity than air is disposed in the gap between the inner circumferential surface 33 of the cylindrical portion 32 of the coil bobbin 30 holding the solenoid coil 10 and the outer circumferential surface 43 of the shaft portion 42 of the valve casing 40. Thus, the heat generated in the solenoid coil 10 is effectively transferred to the valve casing 40 (shaft portion 42) on a heat transfer path that leads to the valve casing 40 from the solenoid coil 10 toward the inner circumferential side. As a result, compared to a typical electromagnetic valve having a gap (air) on a heat transfer path, it is possible to improve the heat release property of releasing heat from the solenoid coil 10 to the valve casing 40 by providing the filler 2, which enables even more effective heat transfer.

In some embodiments, the thermal conductivity of the filler 2 is not less than 0.5W /K • m.

Alternatively, in some embodiments, the thermal conductivity of the filler 2 is not less than 1.0W /K • m.

When the thermal conductivity of the filler 2 is within the above range, it is considerably higher than the thermal conductivity of the air (approximately 0.024W/K • m at room temperature), which enhances the heat release property.

As an example of a material of the filler 2, resin such as thermosetting resin and thermoplastic resin, grease, or the like can be mentioned. Alternatively, resin such as silicone resin and acrylic resin can be mentioned.

In some embodiment, a material with high insulating property is used as a material of the filler 2.

In some embodiments, as illustrated in FIG. 1, the valve casing 40 includes a filling aperture 44. The filling aperture 44 is an aperture for filling the gap between the inner circumferential surface 33 of the cylindrical portion 32 of the coil bobbin 30 and the outer circumferential surface 43 of the shaft portion 42 of the valve casing 40 with the filler 2.

With the filling aperture 44, it is possible to fill the gap with the filler 2 through the filling aperture 44 from outside of the valve casing 40 after assembling the valve casing 40 and the coil bobbin 30. Thus, it is easy to manufacture the electromagnetic valve 1 including the filler 2 disposed in the gap, if any, between the inner circumferential surface 33 of the cylindrical portion 32 of the coil bobbin 30 and the outer circumferential surface 43 of the shaft portion 42 of the valve casing 40.

As illustrated in FIG. 1, the valve casing 40 includes a first member 46 forming the shaft portion 42 and a second member 47 forming a part which faces the outer surface 36 of at least one of the pair of flanges 34.

In the electromagnetic valve 1 from FIG. 1, the second member 47 is an annular member that forms a part that faces the outer surface 36 of one of the pair of flanges 34 of the coil bobbin 30, which is closer to the valve body 20. On the other hand, on the opposite side of the second member 47 across the coil bobbin 30 (i.e., a part of the pair of flanges 34 that is further from the valve body 20), a flange 45 of the first member 46 protrudes in the radial direction of the shaft portion 42 of the valve casing 40.

That is, the second member 47 is disposed on the solenoid coil 10 at a side opposite to a direction in which the solenoid coil 10 is inserted into the valve casing 40, and adjacent to the coil bobbin 30.

Further, the shaft portion 42 of the valve casing 40 formed by the first member 46 includes a protruding portion 41 that protrudes toward the valve body 20 from the coil bobbin 30 in the axial direction of the shaft portion 42. The protruding portion 41 is disposed on the inner circumferential side of the second member 47 in the valve casing 40, and is adjacent to the armature 26 of the valve body 20.

In the electromagnetic valve 1 illustrated in FIG. 1, the first member 46 includes a magnetic body 52 for forming a magnetic path which leads to the valve body 20 from the solenoid coil 10. The magnetic body 52 forms the shaft portion 42. Further, the second member 47 includes a non-magnetic body 54 of a ring shape which is inserted onto the shaft portion 42 to which the coil bobbin 30 is attached. Further, in the electromagnetic valve 1, the shaft portion 42 surrounded by the non-magnetic body 54 is configured to apply the magnetic force to the valve body 20.

In this case, the first member 46 disposed inside of the inner circumferential surface 33 of the cylindrical portion 32 of the coil bobbin 30 includes the magnetic body 52, while the second member 47 disposed outside the cylindrical portion 32 of the coil bobbin 30 in the axial direction includes the non-magnetic body 54, which makes it possible to reduce magnetic flux lines that extend toward the second member 47, and to form the magnetic flux lines concentrated on the first member 46 including the protruding portion 41. As a result, it is possible to enhance the electromagnetic force (electromagnetic attractive force) of the solenoid coil 10 for driving the valve body 20.

Specifically, in the valve body 20, the armature 26 is a part disposed adjacent to the shaft portion 42 (protruding portion 41) in the axial direction of the shaft portion 42. Thus, the electromagnetic force of the solenoid coil 10 causes the magnetic flux lines to be concentrated on the shaft portion 42 (protruding portion 41) as described above, so as to apply magnetic force in particular to the armature 26 adjacent to the shaft portion 42 (protruding portion 41). Accordingly, the armature 26 is effectively attracted to the shaft portion 42 so that entire the valve body 20 shifts its position.

As a material for forming the magnetic body 52 of the first member 46, magnetic metal such as magnetic chrome molybdenum steel (e.g. SCM 440) can be mentioned.

Further, as a material for forming the non-magnetic body 54 of the second member 47, non-magnetic metal such as non-magnetic stainless steel (e.g. SUS 303) can be mentioned.

In some embodiment, the thermal conductivity of the first member 46 is higher than that of the second member 47.

In this way, it is possible to dissipate the heat, which has transferred to the shaft portion 42 of the first member 46 from the solenoid coil 10 via the filler 2, to the outside effectively. Thus, in cooperation with the above configuration, the heat transfer via the path leading to the valve casing 40 from the solenoid coil 10 toward the inner circumferential side is even more promoted.

As a material for forming the first member 46 having a higher thermal conductivity than the second member 47, chrome molybdenum steel (e.g. SCM 440 having a thermal conductivity of 60W /K • m) can be mentioned.

Further, as a material for forming the second member 47 having a lower thermal conductivity than the first member 46, stainless steel (e.g. SUS 303 having a thermal conductivity of 16W /K • m) can be mentioned.

In some embodiments, as illustrated in FIG. 1, the valve casing 40 includes a flow channel 56 of fluid that is to be controlled by the electromagnetic valve 1, and the valve casing 40 includes a seal 58 for blocking a path through which the fluid flows from the flow channel 56 to the solenoid coil 10.

In the electromagnetic valve 1 illustrated in FIG. 1, the heat release property of releasing heat from the solenoid coil 10 is enhanced by disposing the filler 2 between inner circumferential surface 33 of the cylindrical portion 32 of the coil bobbin 30 and the outer circumferential surface 43 of the shaft portion 42 of the valve casing 40. In this way, it is no longer necessary to actively guide the fluid to the solenoid coil 10 for the purpose of cooling the solenoid coil 10. Thus, it is possible to provide the seal 58 for blocking the path through which the fluid flows from the flow channel 56 to the solenoid coil 10 for the valve casing 40, which makes it possible to prevent leakage of the fluid to the outside of the valve casing 40.

Further, as illustrated in FIG. 1, the electromagnetic valve 1 may include a coil-removing aperture 51 for taking out opposite ends of the coil wound around the coil bobbin 30 to the outside. The electromagnetic valve 1 may be configured such that the opposite ends of the coil wound around the coil bobbin 30 are taken out from the electromagnetic valve 1 through a cutout 37 (described below) and the coil-removing aperture 51 disposed on the coil bobbin 30.

In some embodiments, the coil bobbin 30 has a thermal conductivity of not less than 50W /K • m.

In this case, the coil bobbin 30 holding the solenoid coil 10 has a high thermal conductivity, which promotes heat release from the solenoid coil 10 to the valve casing 40 via the coil bobbin 30.

In some embodiments, a material of the coil bobbin 30 may be resin (such as polyamide resin and epoxy resin).

In some embodiments, a material of the coil bobbin 30 may be metal.

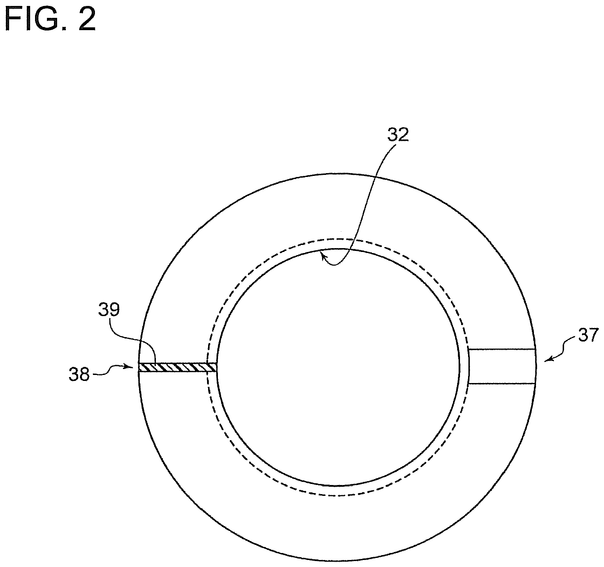

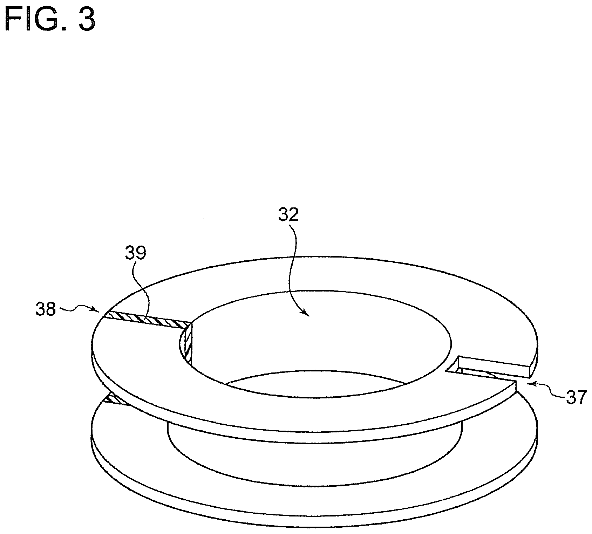

Here, FIG. 2 and 3 are a planar view and a perspective view, respectively, of a configuration of the coil bobbin according to one embodiment of the present invention. In the drawings, the solenoid coil 10 is not yet wound around the coil bobbin 30.

The material of the coil bobbin 30 in the drawings is metal, and the coil bobbin 30 includes a slit 38 that extends in the axial direction of the cylindrical portion 32. The slit 38 disposed on the coil bobbin 30 is filled with an insulating material 39. Further, the coil bobbin 30 may include a cutout 37 for taking out the opposite ends of the coil wound around to the outside of coil bobbin 30, as illustrated in FIG. 1.

In the electromagnetic valve 1 including the coil bobbin 30 in FIGs. 2 and 3, the coil bobbin 30 holding the solenoid coil 10 is formed from metal having a high thermal conductivity, which promotes heat release from the solenoid coil 10 to the valve casing 40 via the coil bobbin 30. Further, the slit 38 is disposed on the coil bobbin 30 so as to extend in the axial direction of the cylindrical portion 32, which restricts eddy current generated in the coil bobbin 30.

Further, since the slit 38 is filled with the insulating material 39, it is possible to wind the coil without reducing the eddy-current restricting effect, which facilitates manufacture of the solenoid coil 10.

If the coil is wound around the coil bobbin 30 without filling the slit 38 formed on the coil bobbin 30 with the insulating material 39, the slit 38 may be closed by the force that winds and tightens the coil. This may lead to a decrease in the eddy-current preventing effect achieved by forming the slit 38. In view of this, the slit 38 is filled with the insulating material 39, so that the slit 38 is maintained after winding the coil without being closed when winding the coil, which facilitates manufacture of the solenoid coil 10 having the eddy-current preventing effect.

In some embodiments, a material of the coil bobbin 30 contains aluminum or aluminum alloy.

In this case, the material of the coil bobbin 30 includes aluminum, which has a high thermal conductivity (127 to 193W /K • m). Thus, heat release from the solenoid coil 10 to the valve casing 40 via the coil bobbin 30 is promoted.

As the insulating material 39 for filling the slit 38 disposed on the coil bobbin 30, any material can be used as long as it is non-magnetic and has no electrical conductivity. As an example of the insulating material 39, resin can be mentioned.

Next, a method of manufacturing the electromagnetic valve 1 in FIG. 1 will be described.

The method of manufacturing the electromagnetic valve 1 according to one embodiment includes an inserting step and a filling step.

In the inserting step, the shaft portion 42 of the valve casing 40 is inserted into the cylindrical portion 32 of the coil bobbin 30 holding the solenoid coil 10.

The valve casing 40 may be assembled such that the first member 46 forming the shaft portion 42 and the second member 47 are arranged on opposites sides of the pair of flange 34 so as to sandwich the coil bobbin 30, after inserting the shaft portion 42 of the valve casing 40 into the cylindrical portion 32 of the coil bobbin 30.

In the filling step, in the gap, if any, between the inner circumferential surface 33 of the cylindrical portion 32 of the coil bobbin 30 and the outer circumferential surface 43 of the shaft portion 42 of the valve casing 40 is filled with the filler 2. The filler 2 has a higher thermal conductivity than the air.

In the inserting step, the coil bobbin 30 is fit onto the first member 46 forming the shaft portion 42 of the valve casing 40. In this inserting step, a gap is formed between the inner circumferential side of the coil bobbin 30 and the valve casing 40. This is because, if the diameters were designed for the cylindrical portion 32 of the coil bobbin 30 and the shaft portion 42 of the valve casing 40 so as not to form a gap, it would not be possible to insert the coil bobbin 30 smoothly, which would make it difficult to assemble the electromagnetic valve 1. Thus, in a normal case the coil bobbin 30 and the valve casing 40 are originally designed to form a slight gap.

When there is a gap between the inner circumferential surface 33 of the cylindrical portion 32 of the coil bobbin 30 and the outer circumferential surface 43 of the shaft portion 42 of the valve casing 40 during the inserting step for the above reason, for instance, the gap is filled with the filler 2 having a higher thermal conductivity than the air.

At this time, the gap may be filled with the filler 2 from the outside of the valve casing 40 through the filling aperture 44 disposed on the valve casing 40.

In some embodiments, in the filling step, the gap may be filled with the filler 2 while reducing the pressure in the gap between the inner circumferential surface 33 of the cylindrical portion 32 of the coil bobbin 30 and the outer circumferential surface 43 of the shaft portion 42 of the valve casing 40.

At this time, the pressure in the gap between the inner circumferential surface 33 of the cylindrical portion 32 of the coil bobbin 30 and the outer circumferential surface 43 of the shaft portion 42 of the valve casing 40 may be reduced by sucking the gas in the gap through the coil-removing aperture 51 disposed on the valve casing 40.

In this case, since the gap is filled with the filler 2 while reducing the pressure in the gap between the inner circumferential surface 33 of the cylindrical portion 32 of the coil bobbin 30 and the outer circumferential surface 43 of the shaft portion 42 of the valve casing 40, it is easy to make the filler 2 adhere to the inner circumferential surface 33 of the cylindrical portion 32 of the coil bobbin 30 and the outer circumferential surface 43 of the shaft portion 42 of the valve casing 40. Thus, it is possible to further enhance the heat release property of releasing the heat generated in the solenoid coil 10.

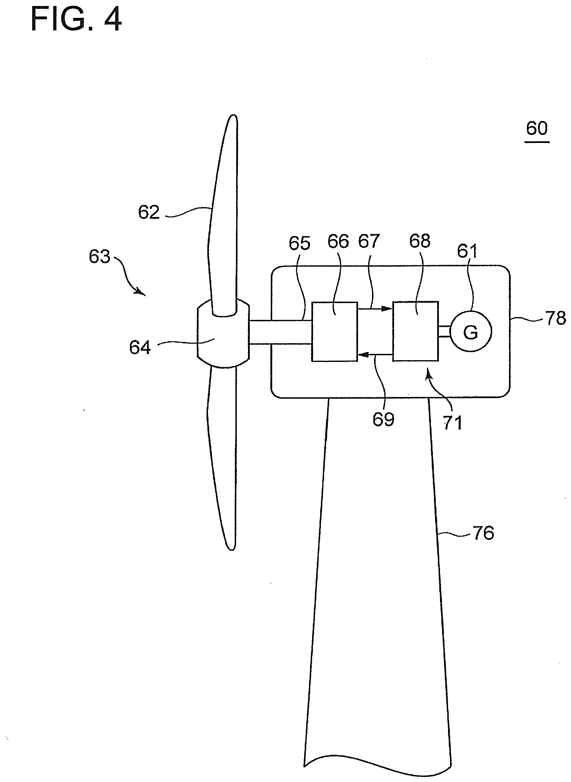

Next, in reference to FIGs. 4 to 6, configurations of a fluid machine to which the electromagnetic valve according to the embodiment of the present invention is applied, of a hydraulic machine and of a wind turbine power generating apparatus that are examples of the renewable energy power generating apparatuses, will be described.

FIG. 4 is a schematic diagram of a wind turbine power generating apparatus (renewable energy power generating apparatus) according to one embodiment of the present invention.

The wind turbine power generating apparatus 60 (renewable energy power generating apparatus) in FIG. 4 is configured to generate electric power from a renewable energy source. While the renewable energy includes, for instance, fluid energy such as wind and waves, the renewable energy in the present embodiment is wind.

The wind turbine power generating apparatus 60 in FIG. 4 includes at least one blade 62, a hub 64 to which the blade 62 is mounted, a hydraulic pump 66, at least one hydraulic motor 68, and a generator 61.

The hydraulic pump 66 is configured to be driven by rotation of the hub 64. The hydraulic motor 68 is configured to be driven by pressurized oil generated by the hydraulic pump 66. The generator 61 is configured to be driven by the hydraulic motor 68. Here, the hydraulic pump 66 or the hydraulic motor 68 includes a hydraulic machine 80 described below.

In one embodiment, the hydraulic pump 66 is coupled to a rotor 63 including the at least one blade 62 and the hub 64, via a rotation shaft 65. The hydraulic motor 68 is connected to the hydraulic pump 66 via a high pressure line 67 and a low pressure line 69. Specifically, the outlet of the hydraulic pump 66 is connected to the inlet of the hydraulic motor 68 via the high pressure line 67, while the inlet of the hydraulic pump 66 is connected to the outlet of the hydraulic motor 68 via the low pressure line 69. The hydraulic pump 66 is driven by the rotation shaft 65 to increase the pressure of working oil, thereby generating a high pressure working oil (pressurized oil). The pressurized oil generated by the hydraulic pump 66 is supplied to the hydraulic motor 68 via the high pressure line 67, and drives the hydraulic motor 68. The low pressure working oil after having performed work in the hydraulic motor 68 is returned again to the hydraulic pump 66 via the low pressure line 69 disposed between the outlet of the hydraulic motor 68 and the inlet of the hydraulic pump 66.

The generator 61 is coupled to the hydraulic motor 68. In one embodiment, the generator 61 is a synchronous generator that is connected to the utility grid and driven by the hydraulic motor 68.

Here, at least a part of the rotation shaft 65 is covered by a nacelle 78 that is disposed on a tower 76. In one embodiment, the hydraulic pump 66, the hydraulic motor 68 and the generator 61 are disposed inside the nacelle 78.

In the wind turbine power generating apparatus 60 illustrated in FIG. 4, the rotor 63 is configured to rotate by utilizing wind energy being a renewable energy. The rotation energy of the rotor 63 is inputted into the generator 61 via a hydraulic transmission 71 including the hydraulic pump 66 and the hydraulic motor 68, so that the generator 61 generates electric power.

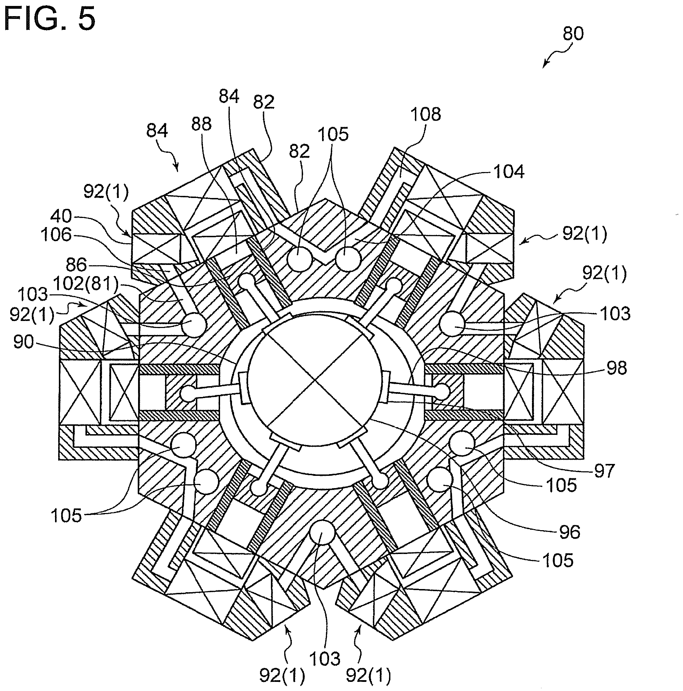

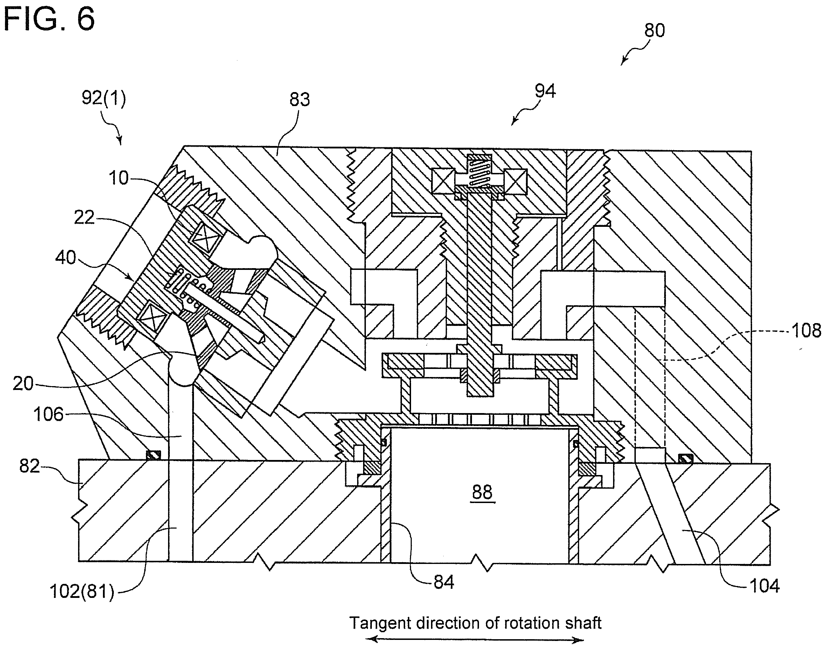

FIG. 5 is a schematic lateral cross-sectional view of a hydraulic machine (fluid machine) according to one embodiment. FIG. 6 is a schematic cross-sectional view of a part the hydraulic machine (fluid machine) according to one embodiment, illustrated with the electromagnetic valve.

The hydraulic machine 80 (fluid machine) illustrated in FIGs. 5 and 6 includes a cylinder block 82 to which the valve casing 40 of the above electromagnetic valve is mountable, a cylinder 84 formed inside the cylinder block 82, and a piston 86 configured to be reciprocable in the axial direction of the cylinder 84 by being guided by the cylinder 84. The cylinder block 82 includes a fluid channel 81 communicable to a working chamber 88 defined by the cylinder 84 and the piston 86. The electromagnetic valve 1 is mounted to the cylinder block 82 so that the valve body 20 is disposed between the fluid channel 81 and the working chamber 88, and configured to be capable of switching the connection state between the working chamber 88 and the fluid channel 81 by supplying electric power to the solenoid coil 10.

As illustrated in FIG. 5, a hydraulic machine 80 according to some embodiments includes a rotation shaft 90, a cylinder block 82 including at least one cylinder 84 that extends in the radial direction of the rotation shaft 90, a piston 86 disposed inside the cylinder 84 to form a working chamber 88 with the cylinder 84, and a conversion mechanism configured to convert reciprocating motion of the piston 86 into rotational motion of the rotation shaft 90, and vice versa.

Here, the cylinder 84 is a part that delimits a cylinder bore in the cylinder block 82. The cylinder block 82 (a structure in a fluid machine) may be an integrally molded part that includes the cylinder 84, or an assembly that includes a cylinder 84 formed by a separate cylinder sleeve (cylinder liner).

In some embodiments, the hydraulic machine 80 includes a plurality of control valves for controlling a flow of working fluid. The control valves includes a high pressure valve 92 for controlling a flow of working fluid having a relatively high pressure, and a low pressure valve 94 for controlling a flow of working fluid having a relatively low pressure.

In some embodiments, at least one of the high pressure valve 92 or the low pressure valve 94 is the above described electromagnetic valve 1 illustrated in FIG. 1. In the hydraulic machine 80 illustrated in FIGs. 5 and 6, the high pressure valve 92 is the electromagnetic valve 1 of FIG. 1.

In a case where the above hydraulic machine 80 is the hydraulic pump 66, when the rotation shaft 90 performs the rotational motion, the piston 86 performs the reciprocating motion as a result of the function of the conversion mechanism. Then, while the piston 86 reciprocates, the low pressure working fluid is supplied to the working chamber 88 through the low pressure valve 94, which leads to compression of the working fluid in the working chamber 88, so that high pressure working fluid is discharged from the working chamber 88 through the high pressure valve 92. That is, when the hydraulic machine 80 is the hydraulic pump 66, the low pressure valve 94 functions as a supply valve that controls supply of the working fluid to the working chamber 88, and the high pressure valve 92 functions as a discharge valve that controls discharge of the working fluid from the working chamber 88.

In a case where the hydraulic machine 80 is the hydraulic motor 68, when the high pressure working oil is supplied to the working chamber 88 through the high pressure valve 92, the piston 86 performs the reciprocating motion due to fluid energy of the working fluid, and the rotation shaft 90 performs the rotational motion due to the function of the conversion mechanism. Here, the working fluid having obtained a low pressure in the working chamber 88 is discharged from the working chamber 88 through the low pressure valve 94. That is, when the hydraulic machine 80 is the hydraulic motor 68, the high pressure valve 92 functions as a supply valve that controls supply of the working fluid to the working chamber 88, and the low pressure valve 94 functions as a discharge valve that controls discharge of the working fluid from the working chamber 88.

In some embodiment, as illustrated in FIG. 5, the conversion mechanism includes an eccentric cam 96 coupled eccentrically to the rotation shaft 90 and being rotatable along with the rotation shaft 90, a shoe 97 slidably contacting the eccentric cam 96, and a boll joint 98 connecting the shoe 97 and the piston 86.

In some embodiments, the conversion mechanism includes a lobed cam (ring cam) fixed to the rotation shaft 90 and including a cam surface, and a roller interposed between the cam surface and the piston 86.

In some embodiments, the conversion mechanism includes a crank pin and a connecting rod.

In some embodiments, the hydraulic machine 80 includes at least one valve block 83 fixed to the cylinder block 82. At least one high pressure valve 82 and at least one low pressure valve 94 are attached to the valve block 83.

In some embodiments, as illustrated in FIG. 5, six cylinders 84, for instance, are arranged around the rotation shaft 90, and six valve blocks 83 are mounted to the cylinder block 82, corresponding to the number of the cylinders 84.

In some embodiments, the cylinder block 82 includes a high pressure flow channel 102 that is a fluid channel for high pressure fluid, and a low pressure flow channel 104 for low pressure fluid. The high pressure flow channel 102 of the cylinder block 82 is connected to a flow channel 106 for high pressure fluid disposed in the valve block 83, and the low pressure flow channel 104 of the cylinder block 82 is connected to a flow channel 108 for low pressure fluid disposed in the valve block 83.

In some embodiments, as illustrated in FIG. 5, the high pressure flow channel 102 disposed in the cylinder block 82 constitutes a fluid channel 81 that is communicable to the working chamber 88 delimited by the cylinder 84 and the piston 86 via the flow channel 106 for the high pressure fluid disposed in the valve block 83.

In some embodiments, the high pressure flow channel 102 includes a high pressure axial flow channel 103 extending in the axial direction of the rotation shaft 90 inside the cylinder block 82. The high pressure flow channel 102 is configured to communicate with the high pressure line 67 of the wind turbine power generating apparatus 60 via the above high pressure axial flow channel 103.

In some embodiments, the low pressure flow channel 104 includes a low pressure axial flow channel 105 extending in the axial direction of the rotation shaft 90 inside the cylinder block 82, and is configured to communicate with the low pressure line 69 of the wind turbine power generating apparatus 60 via the above low pressure axial flow channel 105.

In some embodiment, the cylinder block 82 has a thermal conductivity of not less than 5W/K • m.

According to the hydraulic machine 80 of the above embodiments, the cylinder block 82 to which the electromagnetic valve 1 is to be incorporated has a relatively high thermal conductivity of not less than 5W /K • m. Thus, the heat having been generated in the solenoid coil 10 of the electromagnetic valve 1 is smoothly transferred to the cylinder block 82 disposed outside the electromagnetic valve 1 via the valve casing 40. As a result, it is possible to even further enhance the heat release property of releasing heat generated in the solenoid coil 10.

Further, according to the renewable energy power generating apparatus employing the hydraulic machine 80 of the above embodiments, the cylinder block 82 to which the electromagnetic valve 1 is to be incorporated has a relatively high thermal conductivity of not less than 5W /K • m, in the hydraulic pump 66 or the hydraulic motor 68. Thus, the heat having been generated in the solenoid coil 10 is smoothly transferred to the cylinder block 82 disposed outside the electromagnetic valve 1 via the valve casing 40. As a result, it is possible to even further enhance the heat release property of releasing heat generated in the solenoid coil 10.

## Claims

1. An electromagnetic valve (1) comprising:
a solenoid coil (10) ;
a valve body (20) configured to be driven by electromagnetic force of the solenoid coil (10);
a coil bobbin (30) which includes a cylindrical portion (32) and a pair of flanges (34) disposed so as to extend radially outward from opposite ends of the cylindrical portion (32), and which holds the solenoid coil (10) in a space formed between the pair of flanges (34) at an outer circumferential side of the cylindrical portion (32);
a valve casing (40) which includes a shaft portion (42) inserted through the cylindrical portion (32) of the coil bobbin (30), and which accommodates the coil bobbin (30) disposed around the shaft portion (42), the solenoid coil (10) and the valve body (20); and **characterised by**
a filler (2) which is disposed in a gap between an inner circumferential surface (33) of the cylindrical portion (32) of the coil bobbin (30) and an outer circumferential surface (43) of the shaft portion (42) of the valve casing (40), and which has a thermal conductivity higher than that of air,
wherein the valve casing (40) includes a first member (46) forming the shaft portion (42) and a second member (47) forming a part which faces an outer surface of at least one of the pair of flanges (34), and
wherein the first member (46) has a thermal conductivity higher than that of the second member (47).

2. The electromagnetic valve (1) according to claim 1,
wherein the valve casing (40) includes a filling aperture (44) for filling the gap between the inner circumferential surface (33) of the cylindrical portion (32) of the coil bobbin (30) and the outer circumferential surface (43) of the shaft portion (42) of the valve casing (40) with the filler (2).

3. The electromagnetic valve (1) according to claim 1 or 2,
wherein the thermal conductivity of the filler (2) is not less than 0.5W /K • m.

4. The electromagnetic valve (1) according to any one of claims 1 to 3,
wherein the first member (46) includes a magnetic body (52) for forming a magnetic path which leads to the valve body (20) from the solenoid coil (10), the magnetic body (52) forming the shaft portion (42), and
wherein the second member (47) includes a non-magnetic body (54) of a ring shape which is inserted onto the shaft portion (42) to which the coil bobbin (30) is attached, and the shaft portion (42) surrounded by the non-magnetic body (54) is configured to apply the magnetic force to the valve body (20).

5. The electromagnetic valve (1) according to any one of claims 1 to 4,
wherein the coil bobbin (30) has a thermal conductivity of not less than 50W /K • m.

6. The electromagnetic valve (1) according to any one of claims 1 to 5,
wherein the coil bobbin (30) is made from metal, and the coil bobbin includes a slit (38) which extends in an axial direction of the cylindrical portion (32), the slit (38) being filled with an insulating material.

7. The electromagnetic valve (1) according to claim 6,
wherein the coil bobbin (30) is made from a material containing aluminum or aluminum alloy.

8. The electromagnetic valve (1) according to any one of claims 1 to 7,
wherein the valve casing (40) includes a flow channel (56) of a fluid which is to be controlled by the electromagnetic valve (1), and
wherein the valve casing (40) includes a seal (58) for sealing a path through which the fluid flows from the flow channel (56) to the solenoid coil (10).

9. A fluid machine comprising the electromagnetic valve (1) according to any one of claims 1 to 8, and a structure into which the electromagnetic valve (1) is configured to be incorporated,
wherein the structure includes a flow channel of a fluid which is to be controlled by the electromagnetic valve (1), and has a thermal conductivity of not less than 5W /K • m.

10. A hydraulic machine (80) including the electromagnetic valve (1) according to any one of claims 1 to 8, comprising:
a cylinder block (82) on which the valve casing (40) is mountable;
a cylinder (84) formed inside the cylinder block (82); and
a piston (86) which is configured to be reciprocable in an axial direction of the cylinder (84) by being guided by the cylinder,
wherein the cylinder block (82) includes a flow channel which is communicable to a working chamber (88) defined by the cylinder (84) and the piston (86),
wherein the electromagnetic valve (1) is mounted to the cylinder block (82) so that the valve body (20) is disposed between the flow channel of the fluid and the working chamber (88), and configured to be capable of switching connection between the working chamber (88) and the flow channel of the fluid by supplying electric power to the solenoid coil (10), and
wherein the cylinder block (82) has a thermal conductivity of not less than 5W /K • m.

11. A renewable energy power generating apparatus which generates electric power from a renewable energy source, comprising:
at least one blade (62);
a hub (64) to which the at least one blade (62) is mounted;
a hydraulic pump (66) configured to be driven by rotation of the hub (64);
at least one hydraulic motor (68) configured to be driven by pressurized oil generated in the hydraulic pump (66), and
a generator (61) which is configured to be driven by the at least one hydraulic motor (68),
wherein the hydraulic pump (66) or the hydraulic motor (68) comprises the hydraulic machine according to claim 10.

12. The renewable energy power generating apparatus according to claim 11,
wherein the renewable energy power generating apparatus is a wind turbine power generating apparatus (60) which generates electric power from wind which serves as the renewable energy source.

13. A method of manufacturing an electromagnetic valve (1) which includes: a solenoid coil (10); a valve body (20) configured to be driven by electromagnetic force of the solenoid coil (10); a coil bobbin (30) which includes a cylindrical portion (32) and a pair of flanges (34) disposed so as to extend radially outward from opposite ends of the cylindrical portion (32), and which holds the solenoid coil (10) in a space formed between the pair of flanges (34) at an outer circumferential side of the cylindrical portion (32); and a valve casing (40) which includes a shaft portion (42) inserted through the cylindrical portion (32) of the coil bobbin (30), and which accommodates the coil bobbin (30) disposed around the shaft portion (42), the solenoid coil (10) and the valve body (20),
wherein the valve casing (40) includes a first member (46) forming the shaft portion (42) and a second member (47) forming a part which faces an outer surface of at least one of the pair of flanges (34), and
wherein the first member (46) has a thermal conductivity higher than that of the second member (47)
the method comprising:
an inserting step of inserting the shaft portion (42) of the valve casing (40) into the cylindrical portion (32) of the coil bobbin (30) holding the solenoid coil (10); and
a filling step of filling a gap between an inner circumferential surface (33) of the cylindrical portion (32) of the coil bobbin (30) and an outer circumferential surface (43) of the shaft portion (42) of the valve casing (40) with a filler (2) having a thermal conductivity higher than that of air.

14. The method of manufacturing an electromagnetic valve (1) according to claim 13,
wherein, in the filling step, the gap is filled with the filler (2) while reducing a pressure in the gap between the inner circumferential surface (33) of the cylindrical portion (32) of the coil bobbin (30) and the outer circumferential surface (43) of the shaft portion (42) of the valve casing (40).

## Patentansprüche

1. Elektromagnetventil (1), umfassend;
eine Magnetspule (10);
einen Ventilkörper (20), der konfiguriert ist, um durch elektromagnetische Kraft der Magnetspule (10) angetrieben zu werden;
einen Spulenkörper (30), der einen zylindrischen Abschnitt (32) und ein Paar Flansche (34) aufweist, die so angeordnet sind, dass sie sich von gegenüberliegenden Enden des zylindrischen Abschnitts (32) radial nach außen erstrecken, und der die Magnetspule (10) in einem Raum hält, der zwischen dem Paar Flansche (34) an einer äußeren Umfangsseite des zylindrischen Abschnitts (32) gebildet ist;
ein Ventilgehäuse (40), das einen Wellenabschnitt (42) enthält, der durch den zylindrischen Abschnitt (32) des Spulenkörpers (30) eingesetzt ist, und der den Spulenkörper (30), der um den Wellenabschnitt (42) angeordnet ist, die Magnetspule (10) und den Ventilkörper (20) aufnimmt; und **gekennzeichnet durch**
einen Füllstoff (2), der in einem Spalt zwischen einer inneren Umfangsfläche (33) des zylindrischen Abschnitts (32) des Spulenkörpers (30) und einer äußeren Umfangsfläche (43) des Wellenabschnitts (42) des Ventilgehäuses (40) angeordnet ist und dessen Wärmeleitfähigkeit höher ist als die von Luft,
wobei das Ventilgehäuse (40) ein erstes Element (46) aufweist, das den Wellenabschnitt (42) bildet, und ein zweites Element (47), das einen Teil bildet, der einer äußeren Fläche mindestens eines der beiden Flansche (34) gegenüberliegt, und
wobei das erste Element (46) eine Wärmeleitfähigkeit aufweist, die höher ist als die des zweiten Elements (47).

2. Elektromagnetventil (1) nach Anspruch 1,
wobei das Ventilgehäuse (40) eine Einfüllöffnung (44) zum Füllen des Spalts zwischen der inneren Umfangsfläche (33) des zylindrischen Abschnitts (32) des Spulenkörpers (30) und der äußeren Umfangsfläche (43) des Wellenabschnitts (42) des Ventilgehäuses (40) mit dem Füllstoff (2) aufweist.

3. Elektromagnetventil (1) nach Anspruch 1 oder 2,
wobei die Wärmeleitfähigkeit des Füllstoffs (2) nicht weniger als 0,5 W/m • K beträgt.

4. Elektromagnetventil (1) nach einem der Ansprüche 1 bis 3,
wobei das erste Element (46) einen Magnetkörper (52) zum Bilden eines Magnetpfads aufweist, der zum Ventilkörper (20) von der Magnetspule (10), dem den Wellenabschnitt (42) bildenden Magnetkörper (52) führt, und
wobei das zweite Element (47) einen amagnetischen Körper (54) mit einer Ringform aufweist, der auf den Wellenabschnitt (42) eingesetzt ist, an dem der Spulenkörper (30) befestigt ist, und der Wellenabschnitt (42), der von dem amagnetischen Körper (54) umgeben ist, konfiguriert ist, um die Magnetkraft auf den Ventilkörper (20) auszuüben.

5. Elektromagnetventil (1) nach einem der Ansprüche 1 bis 4,
wobei der Spulenkörper (30) eine Wärmeleitfähigkeit von nicht weniger als 50 W/m • K aufweist.

6. Elektromagnetventil (1) nach einem der Ansprüche 1 bis 5,
wobei der Spulenkörper (30) aus Metall hergestellt ist, und der Spulenkörper einen Schlitz (38) aufweist, der sich in axialer Richtung des zylindrischen Abschnitts (32) erstreckt, wobei der Schlitz (38) mit einem Isoliermaterial gefüllt ist.

7. Elektromagnetventil (1) nach Anspruch 6,
wobei der Spulenkörper (30) aus einem Aluminium oder einer Aluminiumlegierung enthaltenden Material hergestellt ist.

8. Elektromagnetventil (1) nach einem der Ansprüche 1 bis 7,
wobei das Ventilgehäuse (40) einen Strömungskanal (56) eines Fluids umfasst, das durch das Elektromagnetventil (1) gesteuert werden soll, und
wobei das Ventilgehäuse (40) eine Dichtung (58) zum Abdichten eines Pfads, durch den das Fluid vom Strömungskanal (56) zur Magnetspule (10) fließt, umfasst.

9. Fluidmaschine, umfassend das Elektromagnetventil (1) nach einem der Ansprüche 1 bis 8 und eine Struktur, in die das Elektromagnetventil (1) konfiguriert ist, eingebaut zu werden,
wobei die Struktur einen Strömungskanal eines Fluids umfasst, das durch das Elektromagnetventil (1) zu steuern ist, und das eine Wärmeleitfähigkeit von nicht weniger als 5 W/m • K aufweist.

10. Hydraulikmaschine (80), umfassend das Elektromagnetventil (1) nach einem der Ansprüche 1 bis 8, aufweisend:
einen Zylinderblock (82), an dem das Ventilgehäuse (40) anbringbar ist;
einen Zylinder (84), der innerhalb des Zylinderblocks (82) ausgebildet ist; und
einen Kolben (86), der konfiguriert ist, um in axialer Richtung des Zylinders (84) hin- und herbewegbar zu werden, indem er durch den Zylinder geführt wird,
wobei der Zylinderblock (82) einen Strömungskanal aufweist, der mit einer durch den Zylinder (84) und den Kolben (86) definierten Arbeitskammer (88) in Verbindung stehen kann, wobei das Elektromagnetventil (1) so am Zylinderblock (82) angebaut ist, dass der Ventilkörper (20) zwischen dem Strömungskanal des Fluids und der Arbeitskammer (88) angeordnet ist, und konfiguriert ist, um die Verbindung zwischen der Arbeitskammer (88) und dem Strömungskanal des Fluids durch Zuführen elektrischer Energie zur Magnetspule (10) umschalten zu können, und
wobei der Zylinderblock (82) eine Wärmeleitfähigkeit von nicht weniger als 5 W/m • K aufweist.

11. Energieerzeugungsvorrichtung für erneuerbare Energie, die elektrische Energie aus einer erneuerbaren Energiequelle erzeugt, umfassend:
mindestens ein Blatt (62);
eine Nabe (64), an der das mindestens eine Blatt (62) angebaut ist;
eine Hydraulikpumpe (66), die konfiguriert ist, um durch Drehung der Nabe (64) angetrieben zu werden;
mindestens einen Hydraulikmotor (68), der konfiguriert ist, um durch in der Hydraulikpumpe (66) erzeugtes Drucköl angetrieben zu werden, und
einen Generator (61), der konfiguriert ist, um durch den mindestens einen Hydraulikmotor (68) angetrieben zu werden,
wobei die Hydraulikpumpe (66) oder der Hydraulikmotor (68) die Hydraulikmaschine nach Anspruch 10 umfasst.

12. Energieerzeugungsvorrichtung für erneuerbare Energie nach Anspruch 11,
wobei die Energieerzeugungsvorrichtung für erneuerbare Energie eine Windkraftanlagen-Energieerzeugungsvorrichtung (60) ist, die elektrische Energie aus Wind erzeugt, der als die erneuerbare Energiequelle dient.

13. Verfahren zur Herstellung eines Elektromagnetventils (1), das Folgendes umfasst: eine Magnetspule (10); einen Ventilkörper (20), der konfiguriert ist, um durch elektromagnetische Kraft der Magnetspule (10) angetrieben zu werden; einen Spulenkörper (30), der einen zylindrischen Abschnitt (32) und ein Paar Flansche (34) aufweist, die so angeordnet sind, dass sie sich von gegenüberliegenden Enden des zylindrischen Abschnitts (32) radial nach außen erstrecken, und der die Magnetspule (10) in einem Raum hält, der zwischen dem Paar Flansche (34) an einer äußeren Umfangsseite des zylindrischen Abschnitts (32) gebildet ist;
und ein Ventilgehäuse (40), das einen Wellenabschnitt (42) enthält, der durch den zylindrischen Abschnitt (32) des Spulenkörpers (30) eingesetzt ist, und der den Spulenkörper (30), der um den Wellenabschnitt (42) herum angeordnet ist, die Magnetspule (10) und den Ventilkörper (20) aufnimmt,
wobei das Ventilgehäuse (40) ein erstes Element (46) aufweist, das den Wellenabschnitt (42) bildet, und ein zweites Element (47), das einen Teil bildet, der einer äußeren Fläche mindestens eines der beiden Flansche (34) gegenüberliegt, und
wobei das erste Element (46) eine Wärmeleitfähigkeit aufweist, die höher ist als die des zweiten Elements (47),
wobei das Verfahren umfasst:
einen Einfügungsschritt des Einfügens des Wellenabschnitts (42) des Ventilgehäuses (40) in den zylindrischen Abschnitt (32) des Spulenkörpers (30), der die Magnetspule (10) hält; und
einen Füllschritt zum Füllen eines Spaltes zwischen einer inneren Umfangsfläche (33) des zylindrischen Abschnitts (32) des Spulenkörpers (30) und einer äußeren Umfangsfläche (43) des Wellenabschnitts (42) des Ventilgehäuses (40) mit einem Füllstoff (2) mit einer höheren Wärmeleitfähigkeit als Luft.

14. Verfahren zur Herstellung eines elektromagnetischen Ventils (1) nach Anspruch 13,
wobei in dem Füllschritt der Spalt mit dem Füllstoff (2) gefüllt wird, während ein Druck im Spalt zwischen der inneren Umfangsfläche (33) des zylindrischen Abschnitts (32) des Spulenkörpers (30) und der äußeren Umfangsfläche (43) des Wellenabschnitts (42) des Ventilgehäuses (40) verringert wird.

## Revendications

1. Soupape électromagnétique (1) comprenant :
une bobine de solénoïde (10) ;
un corps de soupape (20) configuré pour être entraîné par la force électromagnétique de la bobine de solénoïde (10) ;
une carcasse de bobine (30) qui comprend une partie cylindrique (32) et une paire de brides (34) disposée afin de s'étendre radialement vers l'extérieur à partir des extrémités opposées de la partie cylindrique (32) et qui maintient la bobine de solénoïde (10) dans un espace formé entre la paire de brides (34) au niveau d'un côté circonférentiel externe de la partie cylindrique (32) ;
un boîtier de soupape (40) qui comprend une partie d'arbre (42) insérée à travers la partie cylindrique (32) de la carcasse de bobine (30) et qui loge la carcasse de bobine (30) disposée autour de la partie d'arbre (42), la bobine de solénoïde (10) et le corps de soupape (20) ; et **caractérisée par** :
une matière de remplissage (2) qui est disposée dans un espace entre une surface circonférentielle interne (33) de la partie cylindrique (32) de la carcasse de bobine (30) et une surface circonférentielle externe (43) de la partie d'arbre (42) du boîtier de soupape (40) et qui a une conductivité thermique supérieure à celle de l'air,
dans laquelle le boîtier de soupape (40) comprend un premier élément (46) formant la partie d'arbre (42) et un second élément (47) formant une partie qui fait face à une surface externe d'au moins l'une de la paire de brides (34), et
dans laquelle le premier élément (46) a une conductivité thermique supérieure à celle du second élément (47).

2. Soupape électromagnétique (1) selon la revendication 1,
dans laquelle le boîtier de soupape (40) comprend une ouverture de remplissage (44) pour remplir l'espace entre la surface circonférentielle interne (33) de la partie cylindrique (32) de la carcasse de bobine (30) et la surface circonférentielle externe (43) de la partie d'arbre (42) du boîtier de soupape (40) avec la matière de remplissage (2).

3. Soupape électromagnétique (1) selon la revendication 1 ou 2,
dans laquelle la conductivité thermique de la matière de remplissage (2) n'est pas inférieure à 0,5W/K • m.

4. Soupape électromagnétique (1) selon l'une quelconque des revendications 1 à 3,
dans laquelle le premier élément (46) comprend un corps magnétique (52) pour former un chemin magnétique qui mène au corps de soupape (20) depuis la bobine de solénoïde (10), le corps magnétique (52) formant la partie d'arbre (42), et
dans laquelle le second élément (47) comprend un corps non magnétique (54) de forme annulaire qui est inséré sur la partie d'arbre (42) à laquelle la carcasse de bobine (30) est fixée, et la partie d'arbre (42) entourée par le corps non magnétique (54) est configurée pour appliquer la force magnétique sur le corps de soupape (20).

5. Soupape électromagnétique (1) selon l'une quelconque des revendications 1 à 4,
dans laquelle la carcasse de bobine (30) a une conductivité thermique non inférieure à 50W/K • m.

6. Soupape électromagnétique (1) selon l'une quelconque des revendications 1 à 5,
dans laquelle la carcasse de bobine (30) est réalisée à partir de métal, et la carcasse de bobine comprend une fente (38) qui s'étend dans une direction axiale de la partie cylindrique (32), la fente (38) étant remplie avec un matériau isolant.

7. Soupape électromagnétique (1) selon la revendication 6,
dans laquelle la carcasse de bobine (30) est réalisée à partir d'un matériau contenant de l'aluminium ou un alliage d'aluminium.

8. Soupape électromagnétique (1) selon l'une quelconque des revendications 1 à 7,
dans laquelle le boîtier de soupape (40) comprend un canal d'écoulement (56) d'un fluide qui doit être contrôlé par la soupape électromagnétique (1), et
dans laquelle le boîtier de soupape (40) comprend un joint d'étanchéité (58) pour étanchéifier un chemin à travers laquelle le fluide s'écoule du canal d'écoulement (56) à la bobine de solénoïde (10).

9. Machine à fluide comprenant la soupape électromagnétique (1) selon l'une quelconque des revendications 1 à 8, et une structure dans laquelle la soupape électromagnétique (1) est configurée pour être incorporée,
dans laquelle la structure comprend un canal d'écoulement d'un fluide qui doit être contrôlé par la soupape électromagnétique (1) et a une conductivité thermique non inférieure à 5W/K • m.

10. Machine hydraulique (80) comprenant la soupape électromagnétique (1) selon l'une quelconque des revendications 1 à 8, comprenant :
un bloc-cylindres (82) sur lequel on peut monter le boîtier de soupape (40) ;
un cylindre (84) formé à l'intérieur du bloc-cylindres (82) ; et
un piston (86) qui est configuré pour pouvoir effectuer un mouvement de va-et-vient dans une direction axiale du cylindre (84) en étant guidé par le cylindre,
dans laquelle le bloc-cylindres (82) comprend un canal d'écoulement qui peut communiquer avec une chambre de travail (88) définie par le cylindre (84) et le piston (86),
dans lequel la soupape électromagnétique (1) est montée sur le bloc-cylindres (82) de sorte que le corps de soupape (20) est disposé entre le canal d'écoulement du fluide et la chambre de travail (88), et configuré pour pouvoir commuter la connexion entre la chambre de travail (88) et le canal d'écoulement du fluide en fournissant de l'énergie électrique à la bobine de solénoïde (10), et
dans laquelle le bloc-cylindres (82) a une conductivité thermique non inférieure à 5W/K • m.

11. Appareil de génération d'énergie renouvelable qui génère de l'énergie électrique à partir d'une source d'énergie renouvelable, comprenant :
au moins une aube (62) ;
un moyeu (64) sur lequel la au moins une aube (62) est montée ;
une pompe hydraulique (66) configurée pour être entraînée par la rotation du moyeu (64) ;
au moins un moteur hydraulique (68) configuré pour être entraîné par de l'huile sous pression générée dans la pompe hydraulique (66), et
un générateur (61) qui est configuré pour être entraîné par le au moins un moteur hydraulique (68),
dans lequel la pompe hydraulique (66) ou le moteur hydraulique (68) comprend la machine hydraulique selon la revendication 10.

12. Appareil de génération d'énergie renouvelable selon la revendication 11,
dans lequel l'appareil de génération d'énergie renouvelable est un appareil de génération d'énergie éolienne (60) qui génère de l'énergie électrique à partir du vent qui sert de source d'énergie renouvelable.

13. Procédé pour fabriquer une soupape électromagnétique (1) qui comprend : une bobine de solénoïde (10) ; un corps de soupape (20) configuré pour être entraîné par la force électromagnétique de la bobine de solénoïde (10) ; une carcasse de bobine (30) qui comprend une partie cylindrique (32) et une paire de brides (34) disposée afin de s'étendre radialement vers l'extérieur à partir des extrémités opposées de la partie cylindrique (32) et qui maintient la soupape de solénoïde (10) dans un espace formé entre la paire de brides (34) au niveau d'un côté circonférentiel externe de la partie de cylindre (32) ; et un boîtier de soupape (40) qui comprend une partie d'arbre (42) insérée à travers la partie cylindrique (32) de la carcasse de bobine (30) et qui loge la carcasse de bobine (30) disposée autour de la partie d'arbre (42), la bobine de solénoïde (10) et le corps de soupape (20),
dans lequel le boîtier de soupape (40) comprend un premier élément (46) formant la partie d'arbre (42) et un second élément (47) formant une partie qui fait face à une surface externe d'au moins l'une de la paire de brides (34), et
dans lequel le premier élément (46) a une conductivité thermique supérieure à celle du second élément (47),
le procédé comprenant :
une étape d'insertion pour insérer la partie d'arbre (42) du boîtier de soupape (40) dans la partie cylindrique (32) de la carcasse de bobine (30) maintenant la bobine de solénoïde (10) ; et
une étape de remplissage pour remplir un espace entre une surface circonférentielle interne (33) de la partie cylindrique (32) de la carcasse de bobine (30) et une surface circonférentielle externe (43) de la partie d'arbre (42) du boîtier de soupape (40) avec une matière de remplissage (2) ayant une conductivité thermique supérieure à celle de l'air.

14. Procédé pour fabriquer une soupape électromagnétique (1) selon la revendication 13,
dans lequel, à l'étape de remplissage, l'espace est rempli avec la matière de remplissage (2) tout en réduisant une pression dans l'espace entre la surface circonférentielle interne (33) de la partie cylindrique (32) de la carcasse de bobine (30) et la surface circonférentielle externe (43) de la partie d'arbre (42) du boîtier de soupape (40).
